# EUROPÄISCHE PATENTSCHRIFT

(11) **EP 0 845 622 B1**
(45) Veröffentlichungstag und Bekanntmachung des Hinweises auf die Patenterteilung: **23.04.2003**
(21) Anmeldenummer: 97119788.4
(22) Anmeldetag: 12.11.1997
(51) Int. Cl.: F16J 15/34

(54) **Gleitringdichtungsanordnung für hohe Umlaufgeschwindigkeiten**
Mechanical seal arrangement for high rotational speeds
Garniture mécanique d'étanchéité pour vitesses de rotation élevées

(30) Priorität: 29.11.1996 DE 29620814 U
(43) Veröffentlichungstag der Anmeldung: 03.06.1998
(73) Patentinhaber: Burgmann Dichtungswerke GmbH & Co. KG, 82515 Wolfratshausen (DE)
(72) Erfinder: Nosowicz, Josef, Dr., 82538 Geretsried (DE); Hässler, Wolfgang, D-67549 Worms (DE); Klier, Günter, 82538 Geretsried (DE)
(74) Vertreter: Schmidt, Horst, Dr.

(56) Entgegenhaltungen:
- EP-A- 0 571 791
- EP-A- 0 597 615
- US-A- 3 895 811

## Beschreibung

Die Erfindung betrifft eine Gleitringdichtungsanordnung für hohe Umlaufgeschwindigkeiten gemäss dem Oberbegriff des Patentanspruches 1und insbesondere eine solche für den Einsatz in Gegenwart von flüssigen Medien mit geringer bis fehlender elektrischer Leitfähigkeit, z.B. entsalztes Wasser.

Hauptanwendungsgebiet der Erfindung ist daher bei Speisewasserpumpen, wie sie z.B. bei Kernkraftwerken eingesetzt werden, wobei das abzudichtende Speisewasser Temperaturen von z.B. 200°C haben kann und im allgemeinen in einen salzfreien Zustand aufbereitet wird. Zur Vermeidung von Überhitzungen an der Gleitringpaarung sind bei einer bekannten Dichtungsanordnung, vgl. Burgmann-Lexikon, ABC der Gleitringdichtung, 1988, S. 223-224, Massnahmen getroffen, dass die Gleitringpaarung einem auf eine geeignete Temperatur heruntergekühlten Speisewasser ausgesetzt ist. Verdampfungen im Dichtspalt zwischen den Gleitflächen der Gleitringe können dadurch vermieden und es kann ein stabiler Flüssigkeitsfilm zwischen den Gleitflächen aufrechterhalten werden. Beim Einsatz solcher Gleitringdichtungsanordnungen bei Speisewasserpumpen betragen die Umlaufgeschwindigkeiten des rotierenden Gleitringes häufig 40 m/s und mehr. Bevorzugt wurde unter solchen Einsatzbedingungen bislang eine Gleitringpaarung, bei der der rotierende Gleitring aus Siliciumcarbid (SiC) und der stationäre Gleitring aus einem Kohlenstoffmaterial besteht Diese Materialkombination wurde bislang für erforderlich gehalten, da dadurch eine als schädlich vermutete Erwärmung des rotierenden Gleitringes infolge Reibung mit dem abzudichtenden Medium in Grenzen gehalten werden kann, während anderenteils die Materialpaarung hinsichtlich des Verschleissverhaltens, der Notlaufeigenschaften und der reduzierten Reibung zwischen den zusammenwirkenden Gleitflächen Vorteile bietet. Trotz dieser Massnahmen hat die Praxis gezeigt, dass bei hohen Umlaufgeschwindigkeiten häufige Zerstörungen längs der mit dem salzfrei aufbereiteten Speisewasser in Berührung kommenden Bereiche der SiC-Gleitringe beobachtet werden. Insbesondere zeigten sich zahlreiche Materialausbrüche an den Kanten der SiC-Gleitringe und die Bildung weisslicher, pulvriger Materialveränderungen; die als SiO₂ identifiziert werden konnten. Sobald derartige Veränderungen festgestellt wurden, war ein Austausch der Gleitringdichtungsanordnung erforderlich.

Der Erfindung liegt die Aufgabe zugrunde, eine Gleitringdichtungsanordnung der eingangs erwähnten Art zum Einsatz in der erwähnten Umgebung mit verlängerter Lebensdauer zu schaffen.

Umfangreiche Untersuchungen nach der Ursache für die genannten Schäden an den rotierenden SiC-Gleitringen, die im Rahmen einer Suche nach einer Lösung der genannten Aufgabe durchgeführt wurden, haben gezeigt, dass infolge der hohen Umlaufgeschwindigkeiten elektrische Aufladungen auftreten, die wegen der schlechten Leitfähigkeit von SiC und des aufbereiteten Speisewassers dieses örtlich elektrochemisch zersetzen können. Dabei wird reaktionsfreudiger Sauerstoff freigesetzt, der eine örtliche Umwandlung von SiC in SiO₂ hervorrufen kann. Dagegen wurde festgestellt, dass die bislang befürchtete Überhitzung des rotierenden Gleitringes im Vergleich zu der Zerstörung durch die elektrischen Aufladungen von untergeordneter Bedeutung ist, zumal das Speisewasser im Bereich der Gleitringpaarung auf eine geeignete niedrige Temperatur herabgekühlt und in wärmeabtransportierendem Umlauf gehalten werden kann.

Als Ergebnis dieser Untersuchungen wurde festgestellt, dass die geschilderte Aufgabe in überraschend einfacher Weise mit den Merkmalen gemäss dem kennzeichnenden Teil des Patentanspruches 1 gelöst wird. Danach ist der rotierende Gleitring nicht, wie bei den bekannten Anordnungen elektrisch isoliert, sondern elektrisch ladungsableitend mit den umgebenden Gehäuseteilen verbunden, so dass die entstehenden elektrischen Ladungen an die Umgebung, insbesondere an ein Pumpengehäuse fortlaufend abgeleitet werden können. In Abkehr von der bisherigen, gefestigten Praxis der Ausgestaltung von Gleitringdichtungsanordnungen für den genannten Anwendungszweck kann gemäss einer bevorzugten Weiterbildung der Erfindung der rotierende Gleitring aus einem Material, wie Kohlenstoff, mit guter elektrischer Leitfähigkeit und der drehunbewegliche Gleitring aus einem Material, wie SiC, mit geringer elektrischer Leitfähigkeit gebildet sein. Zwar ist eine derartige Materialpaarung schon aus der US-A-3 895 811 bekannt, doch kann hier eine Ableitung von elektrischen Ladungen nicht stattfinden, da der rotierende Gleitring gegenüber ladungsableitenden Bauteilen der Dichtungsanordnung durch eine isolierende Elastomerschicht abgeschirmt ist. Gemäss einer anderen Weiterbildung der Erfindung kann auch die bisher übliche Materialpaarung beibehalten werden, wenn der rotierende Gleitring, gebildet aus einem Material mit geringer elektrischer Leitfähigkeit, mit einer Umfangsbeschichtung aus einem Material mit guter elektrischer Leitfähigkeit versehen wird. Eine derartige Anordnung ist zwar ebenfalls bekannt (EP-A-597 615), doch dient dabei eine um den rotierenden Gleitring gelegte metallische Bandage nur zur Verstärkung des Gleitringes, ohne dass hierdurch auf das Entstehen und die Abführung von elektrischen Ladungen irgendein Einfluss genommen werden kann.

Als vorteilhaft hat sich erwiesen, wenn, anders als bei bekannten Gleitringdichtungsanordnungen, die Gleitringe nicht in Schrumpfsitz in sie haltenden Montagehäusen starr befestigt sind, sondern in diesen Gehäusen mit Lossitz gehalten sind, so dass sie begrenzte axiale und radiale Bewegungen vornehmen können und so eine selbstausrichtende Eigenschaft erhalten wird. Die durch Abweichungen von der idealen Ausrichtung der Gleitringe verursachte Erhitzung durch Reibung der Gleitflächen kann auf diese Weise vermieden oder in Grenzen gehalten werden. Bezüglich anderer Weiterbildungen der Erfindung wird auf die Ansprüche verwiesen.

Die Erfindung wird nachfolgend anhand von Ausführungsformen und der Zeichnung näher erläutert. Es zeigen:
Fig. 1 in längsgeschnittener Ansicht eine Gleitringdichtungsanordnung gemäss einer Ausführungsform der Erfindung,
Fig. 2 in längsgeschnittener fragmentarischer Ansicht ein Detail einer ersten Modifikation der in Fig. 1 gezeigten Gleitringdichtungsanordnung, und
Fig. 3 in einer Ansicht ähnlich Fig. 2 eine weitere Modifikation der in Fig. 1 gezeigten Gleitringdichtungsanordnung.

Obschon die Erfindung nachfolgend in Verbindung mit der bevorzugten Anwendung bei Speisewasserpumpen beschrieben wird, versteht es sich, dass sie auf dieses Anwendungsgebiet nicht beschränkt ist, sondern Vorteile auch bei anderen Anwendungen bietet, bei denen der rotierende Gleitring einer Gleitringpaarung mit hoher Umlaufgeschwindigkeit von z.B. 40 m/s oder mehr in einem abzudichtenden flüssigen Medium mit geringer elektrischer Leitfähigkeit rotiert und die Gefahr besteht, dass durch elektrische Aufladungen chemische Zersetzungsprodukte entstehen, die korrosive oder aggressive Einflüsse auf die Gleitringe ausüben können.

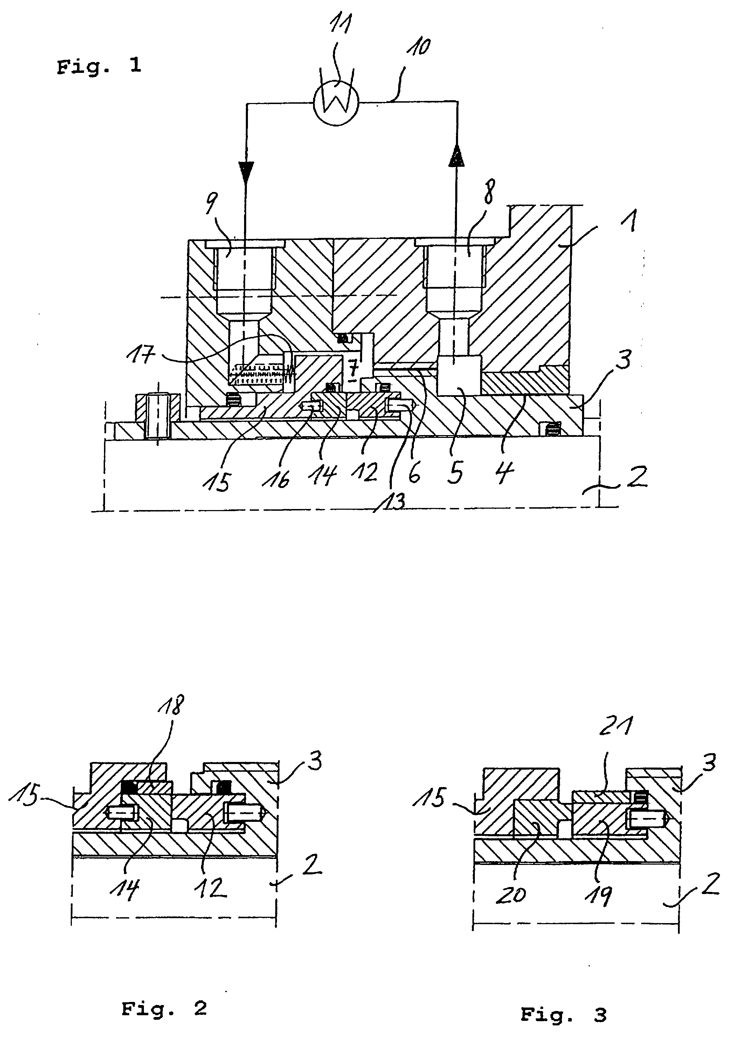

Nachfolgend wird auf Fig. 1 Bezug genommen. Mit dem Bezugszeichen 1 ist das Gehäuse einer Speisewasserpumpe angedeutet, durch das eine mittels der erfindungsgemässen Dichtungsanordnung abgedichtete Welle 2 hindurchgeführt ist. Auf der Welle 2 ist eine Buchse 3 drehfest aufgesetzt, die längs eines Umfangsbereiches zusammen mit einem Bohrungsbereich des Gehäuses 1 einen axialen Drosselspalt 4 bildet, der eine Verbindung mit beschränkter Durchflusskapazität zwischen dem Inneren der Speisewasserpumpe und einer Ringkammer 5 schafft, die in der Dichtungsanordnung definiert ist. Die Ringkammer 5 steht mit einer Austrittspassage 8 im Gehäuse 1 in Verbindung, um das in die Ringkammer 5 eingesickerte heisse Speisewasser nach aussen und über eine Leitung 10 zu einer externen Kühleinrichtung 11, z.B. einem Wärmetauscher, zu führen.

Eine Fördereinrichtung 6, z.B. ein Fördergewinde, ist in einer Verbindung zwischen der Ringkammer 5 und einem Dichtungsraum 7 vorgesehen, der in der Dichtungsanordnung definiert und gegenüber der Aussenumgebung durch eine Gleitringpaarung abgedichtet ist, worauf nachfolgend noch näher eingegangen wird. Der Dichtungsraum 7 steht mit einer Einlasspassage 9 im Gehäuse 1 in Verbindung, um das aus der Kühleinrichtung 11 austretende gekühlte Speisewasser in den Dichtungsraum 7 zurückzuführen.

Die Gleitringpaarung umfasst einen mit der Welle 2 rotierenden Gleitring 12 und einen Gleitring 14, der gegenüber dem Gehäuse 1 drehfest gehalten ist. Inbesondere ist der rotierende Gleitring 12 in einer Aussparung der Buchse 3 mit Lossitz aufgenommen, so dass der rotierende Gleitring 12 begrenzte axiale und radiale Bewegungen gegenüber der Buchse 3 vornehmen kann. Zur Abdichtung des rotierenden Gleitringes 12 gegenüber der Buchse 3 kann ein nicht näher bezeichneter O-Ring oder dgl. vorgesehen sein.

Die drehfeste Verbindung zwischen dem rotierenden Gleitring 12 und der Buchse 3 erfolgt über von der Buchse 3 in eine Bohrung des rotierenden Gleitringes 12 hineinragende Mitnehmerstifte 13.

In analoger Weise ist der stationäre Gleitring 14 der Gleitringpaarung in einem gegenüber dem Pumpengehäuse 1 drehfest, jedoch axial verschieblich angeordneten Montagegehäuse 15 mit Lossitz aufgenommen, wobei die drehfeste Verbindung zwischen dem Gleitring 14 und dem Montagegehäuse 15 über Mitnehmerstifte 16 erfolgt.

Eine Vorspanneinrichtung 17 in Gestalt beispielsweise einer Vielzahl umfänglich verteilter Schraubenfedern wirkt zwischen dem Montagegehäuse 15 und dem Pumpengehäuse 1, um das Montagegehäuse 15 und damit den stationären Gleitring 14 gegen den rotierenden Gleitring 12 vorzuspannen. Bei Stillstand der Welle 2 werden dadurch die zusammenwirkenden radialen Gleitflächen der Gleitringe 12, 14 in dichtendem Eingriff miteinander gehalten. Bei Betrieb der Welle 2 bildet sich dagegen zwischen den Gleitflächen ein Dichtspalt, indem der stationäre Gleitring 14 gegen die Kraft der Vorspanneinrichtung 17 etwas axial ausser Eingriff mit der Gleitfläche des rotierenden Gleitringes 12 bewegt wird. Auf diese Weise wird der aussenumfänglich der Gleitringe 12, 14 befindliche Dichtungsraum 7 gegenüber der innenumfänglich der Gleitringe 12, 14 befindlichen Umgebung abgedichtet.

Erfindungsgemäss besteht der rotierende Gleitring 12 aus einem geeigneten Material mit guter elektrischer Leitfähigkeit. Obschon andere Materialien mit dieser Eigenschaft vorgesehen werden könnten, wird aufgrund seiner guten Gleit- und Notlaufeigenschaft ein Kohlenstoffmaterial bevorzugt. Der stationäre Gleitring 14 kann dagegen aus einem geeigneten anderen Material, insbesondere wegen seiner guten Abriebfestigkeit aus einem Hartmaterial, wie SiC, bestehen. Dieses Material hat jedoch im Gegensatz zum Kohlenstoffmaterial eine nur geringe elektrische Leitfähigkeit.

Die, wie vorbeschrieben, ausgebildete Gleitringdichtungsanordnung arbeitet wie folgt. Es sei angenommen, dass bei einem Einsatz für eine Speisewasserpumpe das abzudichtende Medium salzarmes heisses Speisewasser ist, das keine oder eine nur geringe elektrische Leitfähigkeit besitzt. Das heisse Speisewasser gelangt über den Drosselspalt 4 in die Ringkammer 5. Aus der Ringkammer 5 wird das heisse Speisewasser über die Passage 8 und die Leitung 10 zur Kühleinrichtung 11 aufgrund der Wirkung der Fördereinrichtung 6 gepumpt, um auf eine für den Betrieb der Gleitringdichtungsanordnung geeignete niedrige Temperatur gekühlt zu werden. Das gekühlte Wasser gelangt über die Passage 9 in den Dichtungsraum 7, so dass die Gleitringe 12, 14 einem gekühlten Speisewasser aussenumfänglich ausgesetzt sind. Aus dem Dichtungsraum 7 wird das Speisewasser über die Fördereinrichtung 6 in die Ringkammer 5 gepumpt, um zur Wärmeabfuhr erneut zur Kühleinrichtung 11 zu gelangen.

Bei der Drehung der Welle 2 und damit des rotierenden Gleitringes 12 kann eine elektrische Aufladung längs des Umfanges des rotierenden Gleitringes 12 auftreten, die umso grösser wird, je höher die Umlaufgeschwindigkeit des rotierenden Gleitringes 12 ist. Da der rotierende Gleitring 12 erfindungsgemäss aus einem Material mit guter elektrischer Leitfähigkeit besteht, wird die elektrische Ladung an die Umgebung abgeleitet, so dass die elektrische Ladung keine Zersetzung des Speisewassers in der Umgebung des rotierenden Gleitringes 12 und insbesondere keine Bildung von reaktionsfreudigem freien Sauerstoff bewirken kann.

Der stationäre Gleitring 14, der, wie erwähnt, vorzugsweise aus einem SiC-Hartmaterial bestehen kann, wird trotz der schlechten elektrischen Leitfähigkeit dieses Materials von den genannten Wirkungen nicht berührt, da er in Bezug auf das Speisewasser im Dichtungsraum 7 in Ruhe gehalten ist.

Fig. 2 zeigt eine modifizierte Ausführung der Gleitringpaarung. Die modifizierte Ausführungsform unterscheidet sich von der nach Fig. 1 darin, dass der stationäre Gleitring 14 aus SiC eine Beschichtung oder Ummantelung 18 aus einem Material mit guter elektrischer Leitfähigkeit, z.B. Kohlenstoff, längs seines äusseren, dem Dichtungsraum 7 zugewandten Umfangsbereiches hinzugefügt ist. Die Beschichtung 18 bewirkt, dass eventuelle geringe elektrische Aufladungen am stationären Gleitring 14 über das Montagegehäuse 15 an das Pumpengehäuse 1 abgeleitet werden. Hierdurch werden insbesondere wirksam eventuelle Auswirkungen von elektrischen Aufladungen auf die äussere Umfangskante des stationären Gleitringes 14 vermieden.

Fig. 3 zeigt eine weitere Modifikation der Ausführungsform nach Fig. 1 betr. die Ausgestaltung der Gleitringpaarung. Bei der modifizierten Ausführungsform nach Fig. 3 besteht der rotierende Gleitring 19 in an sich bekannter Weise aus SiC-Hartmaterial, d.h. einem Material mit geringer elektrischer Leitfähigkeit. Der stationäre Gleitring 20 besteht in an sich bekannter Weise aus einem Kohlenstoffmaterial mit guter elektrischer Fähigkeit. Der stationäre Gleitring 20 kann im Montagegehäuse 15 eingeschrumpft oder entsprechend der Ausführungsform nach Fig. 1 in Lossitz gehalten sein.

Erfindungsgemäss ist eine Beschichtung oder Ummantelung 21 aus einem Material mit guter elektrischer Leitfähigkeit, wie Kohlenstoffmaterial, aussenumfänglich des rotierenden Gleitringes 19 vorgesehen und verhindert, dass das SiC-Hartmaterial des rotierenden Gleitringes 19 umfänglich in unmittelbarer Berührung mit dem Speisewasser im Dichtungsraum 7 kommt. Eine Berührung des Speisewassers mit dem rasch umlaufenden rotierenden Gleitring 19 findet im wesentlichen nur längs der mit der Beschichtung 21 versehenen Umfangsfläche statt. Da diese Beschichtung 21 aus einem Material mit guter elektrischer Leitfähigkeit gebildet ist, können eventuell auftretende elektrische Aufladungen unmittelbar über die Buchse 3 abgeleitet werden. In allen übrigen Aufbauteilen unterscheidet sich die modifizierte Ausführungsform nach Fig. 3 nicht von derjenigen nach Fig. 1, so dass hierauf verwiesen werden kann.

Obschon die Erfindung vorausgehend anhand von Gleitringpaarungen mit bevorzugten Kombinationen von Materialien für den stationären Gleitring und rotierenden Gleitring erläutert wurde, versteht es sich, dass sie auf die beschriebenen Materialpaarungen nicht beschränkt ist. Insbesondere umfasst der Begriff "Siliciumcarbid" auch ein Siliciumcarbid-Graphit-Verbundmaterial, wie es z.B. von der Firma Schunk Kohlenstofftechnik GmbH unter dem Handelsnamen SiC30 erhältlich ist. Wird ein derartiger Verbundwerkstoff analog zu der modifizierten Ausführungsform der Erfindung nach Fig. 3 für den rotierenden Gleitring verwendet, bewirkt die Ummantelung oder Beschichtung 21 einen zuverlässigen Schutz gegen unerwünschte elektrische Aufladungen. Unter Beachtung der in Verbindung mit Fig. 1-3 erläuterten Vorgaben kann der Siliciumcarbid-Graphit-Verbundwerkstoff für den rotierenden Gleitring oder stationären Gleitring jeweils in Paarung mit einem Kohlenstoffmaterial für den betreffenden anderen Gleitring oder sowohl für den stationären als auch rotierenden Gleitring verwendet werden. Ferner ist darauf hinzuweisen, dass die Ummantelung oder Beschichtung 18 bzw. 21 der in Fig. 2 und 3 gezeigten modifizierten Ausführungsformen der Erfindung aus jedem anderen geeigneten Material als Kohlenstoffmaterial mit guter elektrischer Leitfähigkeit und Verträglichkeit mit dem Material des betreffenden Gleitringes bestehen kann. Bei der Dichtungsanordnung gemäss Fig. 1 erfolgt die Kühlung des Speisewassers durch einen externen Kühlkreislauf. Anstelle davon könnte auch eine Kühlung des Speisewassers über eine Kühlung der benachbarten Wandungsbereiche des Dichtungsraumes 7 bewirkt werden.

## Patentansprüche

1. Gleitringdichtungsanordnung für hohe Umlaufgeschwindigkeiten zur Abdichtung von flüssigen Medien mit geringer bis fehlender elektrischer Leitfähigkeit, wie salzarmes Speisewasser bei Speisewasserpumpen oder dgl., mit einem Paar Gleitringe, von denen einer drehunbeweglich und der andere zur gemeinsamen Drehung mit einem rotierenden Bauteil montierbar ist, welche zusammenwirkende Gleitflächen aufweisen, die bei Betrieb zwischen sich einen einen mit dem abzudichtenden Medium beaufschlagbaren Bereich der Gleitringdichtungsanordnung gegenüber einem Umgebungsbereich abdichtenden Dichtspalt bilden, wobei einer der Gleitringe im wesentlichen aus einem Material mit guter elektrischer Leitfähigkeit und der andere Gleitring im wesentlichen aus einem Material mit geringer elektrischer Leitfähigkeit gebildet ist, und wobei der rotierende Gleitring wenigstens längs seines mit dem abzudichtenden Medium in Berührung kommenden Umfangsbereiches ein Material mit guter elektrischer Leitfähigkeit umfasst, **dadurch gekennzeichnet, dass** elektrische Ladungen vom Umfangsbereich des rotierenden Gleitrings (12,19) an die Umgebung, insbesondere ein Pumpengehäuse (1), ableitbar sind.

2. Gleitringdichtungsanordnung nach Anspruch 1, **dadurch gekennzeichnet, dass** der rotierende Gleitring (12) aus einem Material mit guter elektrischer Leitfähigkeit und der drehunbewegliche Gleitring (14) aus einem Material mit geringer elektrischer Leitfähigkeit besteht.

3. Gleitringdichtungsanordnung nach Anspruch 1, **dadurch gekennzeichnet, dass** der rotierende Gleitring (19) mit einer Umfangsbeschichtung (21) aus einem Material mit guter elektrischer Leitfähigkeit versehen ist.

4. Gleitringdichtungsanordnung nach Anspruch 1, **dadurch gekennzeichnet, dass** der drehunbewegliche Gleitring (14) aus einem Material mit fehlender bis geringer elektrischer Leitfähigkeit gebildet und mit einer Umfangsbeschichtung (18) aus einem Material mit guter elektrischer Gleitfähigkeit versehen ist.

5. Gleitringdichtungsanordnung nach einem der vorhergehenden Ansprüche, **dadurch gekennzeichnet, dass** jeder Gleitring (12,14,19,20) relatiwerdrehgesichert mit Lossitz in einem Montagegehäuse (3,15) gehalten ist, über das die elektrischen Ladungen an das Pumpengehäuse ableitbar sind.

## Claims

1. A face seal device for high rotational speeds for sealing liquid media of very low to non-existent electrical conductivity such as low-salt feed water in feed water pumps or the like, including a pair of seal rings of which one can be mounted in non-rotational manner and the other for common rotation with a rotating component, said seal rings comprising co-operating seal faces which in operation of the face seal device form a gap therebetween for sealing a zone subjected to the medium that is to be sealed from a surrounding zone, one of said seal rings being formed essentially from a material of high electrical conductivity and the other seal ring essentially from a material of low electrical conductivity, said rotating seal ring comprises a material of high electrical conductivity at least along the peripheral portion thereof coming into contact with the medium that is to be sealed, **characterised in that** electrical charges are removable from said peripheral portion of the rotating seal ring (12,19) to surroundings, in particular to a pump casing (1).

2. A face seal device according to claim 1, **characterised in that** the rotating seal ring (12) consists of a material of high electrical conductivity and the non-rotational seal ring (14) consists of a material of low electrical conductivity.

3. A face seal device according to claim 1, **characterised in that** the rotating seal ring (19) is provided with a peripheral coating (21) of a material of high electrical conductivity.

4. A face seal device according to claim 1, **characterised in that** the non-rotational seal ring (14) is formed from a material of little or no electrical conductivity and is provided with a peripheral coating (18) of a material of high electrical conductivity.

5. A face seal device according to any of the preceding claims, **characterised in that** each seal ring (12,14,19,20) is held by a loose fit in a mounting casing (3, 15) preventing a rotation of the seal ring relative to the casing, the electrical charges being removed to the pump casing through said mounting casing.

## Revendications

1. Dispositif d'étanchement à bagues coulissantes pour vitesses de rotation élevées, qui est destiné à isoler des liquides dont la capacité à conduire l'électricité est faible voire nulle, tels que de l'eau d'alimentation pauvre en sel de pompes d'alimentation ou analogue, comprenant une paire de bagues coulissantes dont l'une est fixe en rotation et dont l'autre peut être montée de manière à tourner en même temps qu'un élément rotatif, lesquelles présentent des surfaces de glissement coopérant entre elles qui, lorsque la pompe fonctionne, forment entre elles une fente réalisant l'étanchéité entre une zone. exposée au fluide à isoler et une zone environnante, sachant que l'une des bagues coulissantes est constituée pour l'essentiel d'un matériau conduisant bien le courant électrique et l'autre bague coulissante d'un matériau conduisant peu le courant électrique, et que la bague coulissante rotative comprend au moins le long de son pourtour qui entre en contact avec le fluide à isoler un matériau conduisant bien le courant électrique, **caractérisé en ce que** les charges électriques peuvent être évacuées du pourtour de la bague coulissante rotative (12, 19) vers l'extérieur, notamment vers un carter de pompe (1).

2. Dispositif d'étanchement à bagues coulissantes selon la revendication 1, **caractérisé en ce que** la bague coulissante rotative (12) est composée d'un matériau conduisant bien le courant électrique et la bague coulissante fixe en rotation (14) d'un revêtement conduisant peu le courant électrique.

3. Dispositif d'étanchement à bagues coulissantes selon la revendication 1, **caractérisé en ce que** la bague coulissante rotative (19) présente un revêtement périphérique (21) en un matériau conduisant bien le courant électrique.

4. Dispositif d'étanchement à bagues coulissantes selon la revendication 1, **caractérisé en ce que** la bague coulissante fixe en rotation (14) est composée d'un matériau conduisant peu voire pas du tout le courant électrique et présente un revêtement périphérique (18) en un matériau conduisant bien le courant électrique.

5. Dispositif d'étanchement à bagues coulissantes selon l'une des revendications précédentes, **caractérisé en ce que** chaque bague coulissante (12, 14, 19, 20) est immobilisée avec un ajustement libre dans un boîtier (3, 15) de manière à éviter les rotations relatives, lequel boîtier permet d'évacuer les charges électriques vers le carter de pompe.
